# EUROPEAN PATENT APPLICATION

(11) **EP 3 193 426 A1**
(43) Date of publication of application: **19.07.2017**
(21) Application number: 16155207.0
(22) Date of filing: 11.02.2016
(51) Int. Cl.: H02J 7/00, G08B 13/14, H02H 5/04, H02M 3/10

(54) **CHARGING TERMINAL**

(30) Priority: 13.01.2016 CN 201610022134
(71) Applicant: Shnzhen LVSUN Electronics Technology Co., Ltd, Sehnzhen City 518109 (CN)
(72) Inventor: XU, Jianhua, Shenzhen City 518109 (CN)
(74) Representative: Hautier IP

(57) **Abstract**

The invention discloses a charging terminal comprising a power module (1), an output module (2), an identification and data distribution module (3), a lithium battery module (4), a Bluetooth-lock unit (5), a motion detection unit (6), a smart temperature control unit (7) and a sterilization unit (8). The output module (2) comprises a plurality of output units in parallel connection. The identification and data distribution module (3) comprises a plurality of cascaded hubs, to form a plurality of data channels respectively connected to the plurality of output units, so as to provide up to 32 output ends integrating charging ends and data transmission ends. Further, the charging terminal according to the invention has such as a faster changing rate and/or data distributed rate, the terminal thus is suitable for using in public places, such as hospital, school, shopping mall, and airport, etc..

## Description

### TECHNICAL FIELD

The present invention relates generally to charging field and, more particularly, to a charging terminal.

### BACKGROUND ART

Nowadays, demands increase rapidly for charging a number of digital products such as mobile phones, Pad and tablet PCs and distributing public information to the same in public places such as hospital, school, shopping mall, railway station and airport. However, a known typical charging device cannot achieve charging with simultaneous data transfer, so people have to disconnect the connection of the charging device from digital products and connect the latter with a data-resource server (such as a computer) when facing the demand of data transfer, which causes inconvenience.

Moreover, though a device capable of integrating a charging end and a data end into an output end has been developed, a problem exists in that the number of output ends is limited (at most eight such output ends integrating a charging end and a data end).

Furthermore, the resistance of an output switch used in such a conventional charging device is higher and the output current of the device is lower, which will cause a slow charging of digital products connected to the output end of such device and a long charging time.

In addition, usually there is only one physical signal transmission channel in the loop network, and all data transfer is conducted only through one distribution medium, which may cause data collision in a transmission channel for several data output ends, thereby reducing the transfer efficiency.

### SUMMARY

An object of the invention is therefore to provide a charging terminal to solve at least one of the foregoing problems of the prior art.

In one aspect, a charging terminal is provided, which comprises a power module connected with a power supply and configured to input, process and output electrical energy from the power supply; an output module comprising a plurality of output units in parallel connection, said plurality of output units electrically connected to a plurality of output ends of the power module respectively so as to provide a plurality of power supply ports simultaneously; and an identification and data distribution module having a data input end and comprising a plurality of data channels respectively connected to the plurality of output units, said identification and data distribution module being configured to identify type of external devices respectively connected to said plurality of power supply ports and provides corresponding charging current and/or distributes data to the identified external devices through the plurality of output units.

The charging terminal of the invention can obtain up to thirty-two output ends integrating charging ends and data distribution ends. In other words, the charging terminal of the invention can charge and distribute data for up to thirty-two digital products (such as phones or tablet PCs) simultaneously.

Further, said power module may comprise an earth leakage protection unit, an energy metering unit and an AC-DC conversion unit, a current from the power supply flowing through the earth leakage protection unit, the energy metering unit and the AC-DC conversion unit in sequence and then to the output module.

Further, said output unit may comprise a short out and overcurrent protection switch having a MOS switch tube with an internal resistance being 30-40 milliohm.

Further, said output unit may comprise an output end connected to an external device; a switch member and a current detecting resistance, connected in series between a feedback end of said output end and a ground end; a protection processor for comparing a voltage signal from said switch member and said current detecting resistance with a reference voltage from a reference voltage source to output a first signal based on a result of the comparison for controlling said switch member to be actuated. In addition, said output unit may also comprise a working state amplifier which inputs said voltage signal from the switch member and the current detecting resistance and outputs a second signal to an indicator light.

Further, said identification and data distribution module may comprise a first stage hub connected to a dada-source server and at least a set of hubs connected to an output end of the first stage hub, said at least a set of hubs comprising a plurality of cascaded hubs.

Further, said data input end of the identification and data distribution module may be connected with said data-source server through network, WIFI, or Bluetooth, said data-source server being installed with a data fixed-type time-divisional and distributing program.

Further, the charging terminal may comprise a lithium battery module which comprises a lithium battery and a DC-DC synchronous rectification step-down unit being electrically connected with said plurality of output units respectively, said lithium battery being connected with the AC-DC conversion unit. Specifically, said DC-DC synchronous rectification step-down unit may comprise an input LC filter circuit, a voltage feedback circuit electrically connected with said input LC filter circuit, a pair of switch tubes connected with said voltage feedback circuit, and an energy storage inductance coupled with said pair of switch tubes. Specifically, said pair of switch tubes may be MOS switch tube (Q1, Q2) with an internal resistance of 30-40 milliohm.

Further, the charging terminal may comprise a Bluetooth-lock unit electrically connected to the AC-DC conversion unit and the lithium battery module respectively, to lock and unlock the charging terminal. And, the charging terminal may further comprise a motion detection unit electrically connected to the AC-DC conversion unit and the lithium battery module, said motion detection unit comprising an alarm and a buzzer interconnected with each other for monitoring motion status of the charging terminal and starting said alarm when monitoring abnormal motion status of the charging terminal. Specifically, said alarm may comprise an anti-theft detection circuit, a controlled ultralow frequency oscillator and a self-excited oscillator, said anti-theft detection circuit electrically connected to a first time-base integrated circuit of said controlled ultralow frequency oscillator, said first time-base integrated circuit electrically connected to a second time-base integrated circuit of said self-excited oscillator, said second time base integrated circuit electrically connected to said buzzer.

Bluetooth-lock technology is used for remotely lock/unlock the charging terminal to prevent an abnormal use of the charging terminal. The alarm of the motion detection unit will be remotely started to sound an alarm when an abnormal movement of the charging terminal is detected, thus achieving anti-theft.

Further, the charging terminal may also comprise an smart temperature control unit electrically connected to the AC-DC conversion unit and the lithium battery module respectively, for detecting and controlling an internal temperature of the charging terminal. Therefore, a cooling device disposed at the interior of the charging terminal will not work unless the internal temperature of the terminal reaches a set value. The working time of the cooling device is greatly reduced, which prolongs its working life and saves replacement cost.

Further, the charging terminal may comprise a sterilization unit comprising an AC-DC power circuit, an ultraviolet sterilization lamp sleeve and an ultraviolet sterilization lamp, said sterilization unit being electrically connected to the AC-DC conversion unit and the lithium battery module respectively. The sterilization unit can be remotely controlled by a Bluetooth device installed with corresponding APP, to sterilize the charging terminal regularly, thereby preventing potential cross inflection of users.

### BRIEF DESCRIPTION OF DRAWINGS

Fig.1 shows a system chart of a charging terminal according to an embodiment of the invention;
Fig.2 shows a circuit schematic view of one output unit of an output module according to an embodiment of the invention;
Fig.3 shows a schematic view of an identification and data distribution module according to an embodiment of the invention;
Fig.4 shows a circuit schematic view of a DC-DC synchronous rectification step-down unit, according to an embodiment of the invention;
Fig.5 shows a circuit schematic view of an alarm of a motion detection unit, according to an embodiment of the invention; and
Fig.6 shows a circuit schematic view of an smart temperature control unit, according to an embodiment of the invention.

### DETAILED DESCRIPTION OF EMBODIMENTS

Some embodiments of the present invention now will be described with reference to the accompanying figures. The following embodiments are only described as examples to illustrate and understand the invention, not limited.

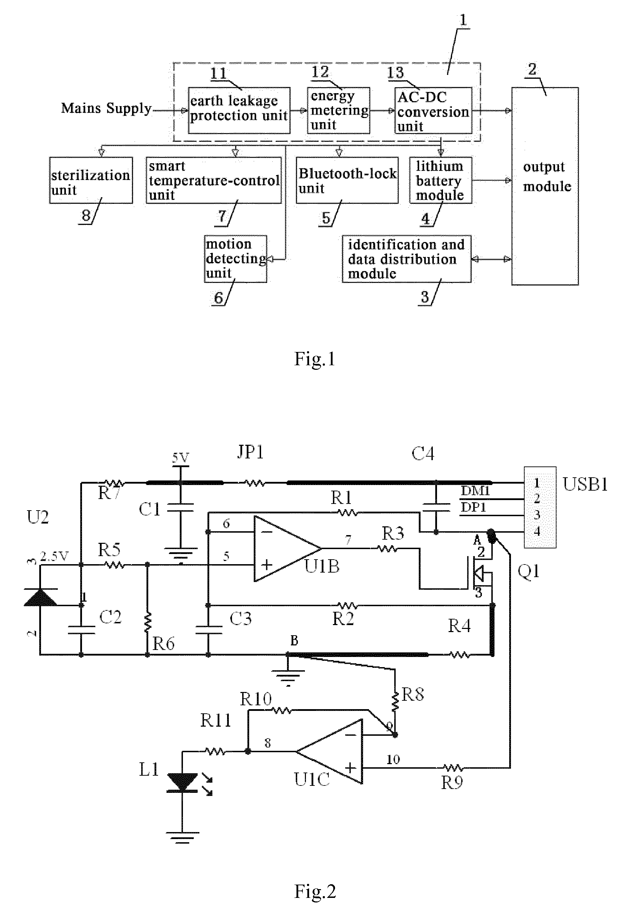

Fig.1 is a block diagram showing a system chart of a charging terminal, according to an embodiment of the invention. As shown in Fig.1, a charging terminal comprises a power module 1 electrically connected with external power supply, an output module 2 and an identification and data distribution module 3.

The power module 1 comprises an earth leakage protection unit 11, an energy metering unit 12 and an AC-DC conversion unit 13. A current flows from power supply into the power module 1, passing through the earth leakage protection unit 11, the energy metering unit 12 and the AC-DC conversion unit 13 in sequence and then to the output module 2 after processed by the AC-DC conversion unit 13. Herein, the power supply is mains supply. Generally, when a phase line of circuit protected by the earth leakage protection unit 11 is connected with a ground end directly or by an unexpected load, a residual current having an approximate sinusoidal waveform and a slowly changing effective value will be generated. When the effective value of such residual current is greater than a certain value, the earth leakage protection unit 11 will cut off the circuit to protect it from damage. The energy metering unit 12 may be an existing device, such as a single-phase intelligent LCD display instrument (Type or Model: SFL2013018) produced by SHENNENG ELECTRIC POWER TECHNOLOGY, Co., Ltd., for measuring and displaying parameters of the power module 1 in real time, such as voltage, current, frequency factor and electrical energy.

In this embodiment, the output module 2 may comprise thirty-two output units having USB output ends and being connected in parallel. Each output unit is electrically connected to output ends of the power module 1, so as to provide 32 power supply ports.

Fig.2 shows a schematic view of a circuit of one output unit of an output module according to an embodiment of the invention. As shown in Fig.2, USB1 is a USB output end connected with an external device (such as, mobile phone or tablet PC, etc.), Q1 is a short out and overcurrent protection switch, R4 is a current detecting resistance, U2 is a reference voltage source, U1B is a protection processor serving as a comparers in this example, U1C is a working state amplifier, and L1 is an indicator light.

As shown in Fig.2, a current from the power module 1 flows from a 5V node of output unit circuit along a thick line, passing through pin 1 of the USB1 in the middle, to the external device, and then flows back via pin 4 of the USB1, passing through pin 2 and pin 3 of the short out and overcurrent protection switch Q1 and the current detecting resistance R4, finally to the ground end.

It should be noted that the short out and overcurrent protection switch Q1 has a MOS switch tube with an internal resistance of 30-40 milliohm which reduces by about 50% compared to that (70-90 milliohm) of an output switch used in existing similar device, so that an output power of each output end may reach 5V 2.4A (for example), and total power of the output module 2 may reach 384W, thereby improving the charging speed of high-current digital products, such as phones or tablet PC, which brings about a greatly convenience for users.

When an output current of the output unit is greater than the set value (e.g., 3 amperes), since an impedance between two points A and B is, e.g., 0.05 ohm, a voltage drop generated between the two points A and B will be greater than 3*0.05=0.15V. This voltage drop is applied to pin 6 of the protection processor U1B by a resistance R1 and is used for comparing with voltage (which is a reference voltage 0.14V obtained from the reference voltage source U2 through resistances R5 and R6) of pin 5 of the protection processor U1B. When the voltage of pin 6 of the protection processor U1B is higher than that of pin 5, pin 7 of the protection processor U1B will output a low voltage, so that the switch Q1 is cut-off and point A keeps a high voltage, thereby keeping output current of the output unit off. Only after the output unit unloads can the protection processor U1B be reset and the output current of the output unit recover. When the output current value of the output unit is less than the set value (e.g., 3 amperes), the voltage of pin 6 is lower than that of pin 5. Under this situation, pin 7 will output a high voltage, leading the switch-on of the switch tube Q1, so as to output the output current. Thus, the output unit can be protected from overcurrent.

Further, when value of the output current of the output unit is less than set value 0.05A of the indicator light L1, a value of voltage applied to the indicator light L1 will be less than 0.0025V because of an impedance 0.05ohm between Point A and B. This voltage is applied to pin 10 of the working state amplifier U1C through a resistance R9, and amplified by the working state amplifier U1C to a value which is less than 1.25V (= 0.0025^{*}500). When the voltage applied to the indicator light L1 is lower than a starting voltage thereof, the indicator light L1 is off. On the other hand, when the value of the output current of the output unit is greater than set value 0.1A, the voltage applied to the indicator light L1 exceeds the starting voltage thereof, the light L1 is on, indicating that an output unit circuit is in charge. This may facilitate users to be aware of charging state of phones or tablet PC.

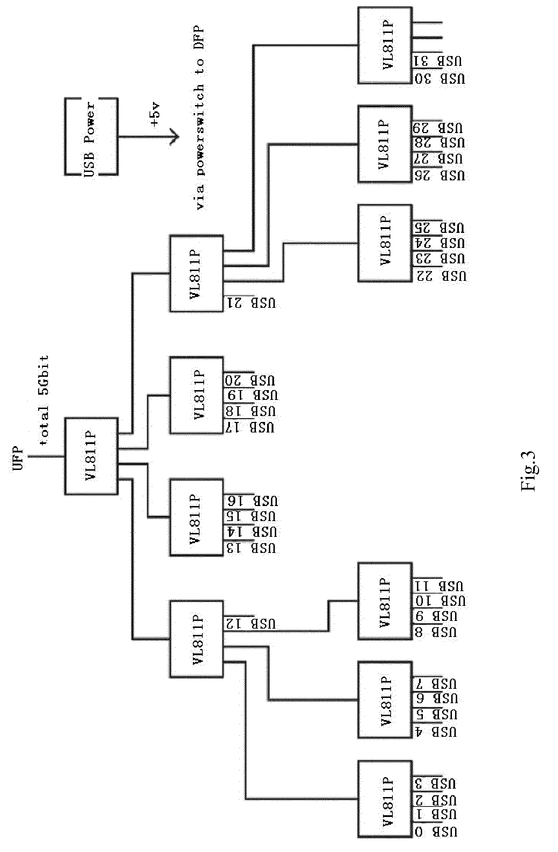

Fig.3 shows a schematic view of the identification and data distribution module 3 according to an embodiment of the invention. As shown in Fig. 3, the identification and data distribution module 3 comprises 11 hubs (for instance, chip VL811 produced by VIA Technologies, Inc.) and provides three-stage of data distribution nodes by cascading the hubs, wherein each hub represents one data distribution node and the data distribution nodes are connected through their dedicated distribution mediums. Specially, a first stage data distribution node, namely a first stage hub, is connected to a data-source server (such as a PC) to receive a data signal sent by the data-source server. The data signal is then shaped, amplified by the first stage hub (e.g. a device VL811P), and further sent to each second stage data distribution node (each second stage hub). Similarly, the second stage hubs shape, amplify data signals sent by the first stage hub and then send the data signals to third stage data distribution nodes (third stage hubs), thereby forming 32 data distribution channels. After introducing hubs, data-collision phenomenon on longer appears in data distribution channels, which increases data transmission efficiency. For example, the data transmission speed of each data distribution channel may reach 5/32 Gbit/s according to the cascading manner of the invention.

The identification and data distribution module 3 comprising 32 data distribution channels is electrically connected with 32 output units of the output module 2 respectively, to form 32 USB ports integrating charging ends and data transmission ends., The identification and data distribution module 3 will identify the device models of these digital products by the hubs, when a plurality of digital products (such as, phones or tablet PCs, etc.) are connected to the USB ports. When the models of digital products are identified, the output ends of the output module 2 will output current to identified products. At this point, the identified products will draw their required charging current according to their structure. On the contrary, unidentified digital products cannot be charged by the charging terminal.

The identification and data distribution module 3 has a data input end which may connected with the data-source server (such as, PC) through wired network, WIFI, or Bluetooth. In some embodiments, users may run a data fixed-type time-divisional and distributing program installed on public computers to distribute the fixed-Model time-divisionally distribute data of public computers to a plurality of phones or tablet PC connected to the output unit to transfer public information (such as, flight information, or Expert visit and time information recorded in the public computers, etc.) to their phones or tablet PCs with one click. Thus, not only can the charging terminal charge one phone or tablet PC and distribute data to the same simultaneously, but also charge 32 phones or tablet PCs and distribute data to the same simultaneously.

In some embodiments, the charging terminal may comprise a lithium battery module 4 which comprises a lithium battery and a DC-DC synchronous rectification step-down unit electrically connected with each other, wherein the lithium battery is electrically connected with the AC-DC conversion unit 13 and further connected with 32 output units through the DC-DC synchronous rectification step-down unit.

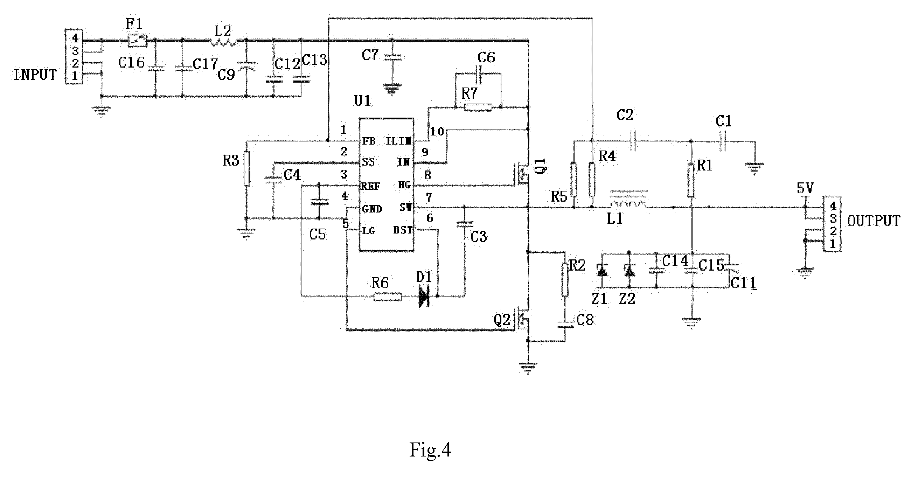

As shown in Fig.4, in DC-DC synchronous rectification step-down unit circuit, capacitances C16, C17, C12, C13, C7 and an inductance L2 constitute an input LC filter circuit; MOS switch tube Q1 is an upper switch, MOS switch tube Q2 is a lower switch; L1 is an energy storage inductance; C14, C15, C11 are output filter capacitances; resistances R1, R3, R4, R5, capacitances C1, C2 and pin 1 of a processor U1 constitute an voltage feedback circuit; capacitance C3, D1, resistance R1 constitute a bootstrap circuit; C5 is an LDO energy storage capacitance, thus constituting an efficient DC-DC synchronous rectification step-down circuit.

Pins 8 and 5 of the processor U1 output a pair of complementary pulse signals. The upper switch MOS tube Q1 will be turn on when pin 8 has a high electrical level, and the lower switch MOS tube Q2 will be cut off when pin 5 has a low electrical level, and input current flows to the energy storage inductance L1. At this moment, the energy storage inductance L1 will generate an electromotive force with left-positive and right-negative, so as to store a high electrical energy into the energy storage inductance L1. Further, the lower switch MOS tube Q2 will be turn on when pin 5 has a high electrical level, and the upper switch MOS tube Q1 will be cut off when pin 8 has a low electrical level, which leads the energy storage inductance L1 generate a counter electromotive force with left-negative and right- positive, and current is output, so as to release the high electrical energy stored by the energy storage inductance L1. Output voltage is fed back to pin 1 of the processer U1 through resistance R1, capacitances C1, C2, resistances R4, R5 and R3, controlling the stability of the output voltage. The DC-DC synchronous rectification step-down unit adapts a MOS switch used in the output module 2 as a switch tube, to reduce power consumption and improve transfer efficiency from general 93% to 96%, so that cruising time of the lithium battery module 4 increases up to 3hrs, thereby realizing an uninterruptible power supply of the charging terminal during a certain time.

In some embodiment, the charging terminal may comprise a Bluetooth-lock unit 5 electrically connected to the AC-DC conversion unit 13 and the lithium battery module 4 respectively, to lock and unlock the charging terminal. The Bluetooth-lock unit 5 may be an existing Bluetooth-lock device, such as Model H-BLE1512 of SHENZHEN DA HAO Electronics co. Ltd.).

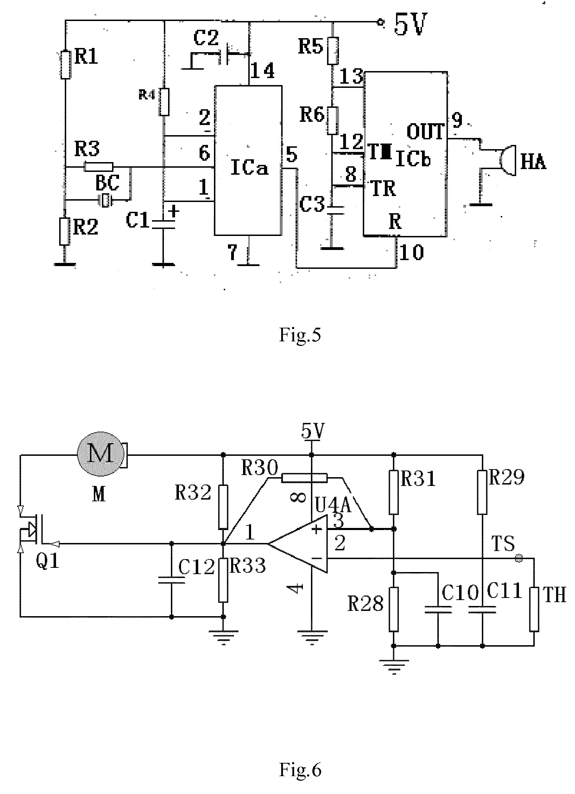

In some embodiment, the charging terminal further may comprise a motion detection unit 6 comprising an alarm and a buzzer HA. As shown in Fig.5, the alarm comprises an anti-theft detection circuit, a controlled ultralow frequency oscillator and a self-excited oscillator. Wherein, the anti-theft detection circuit is composed of a buzzer slice BC, resistances R1-R3 and pin 6 of a first time-base integrated circuit ICa within a double time-base integrated circuit IC (Model NE556 or ICM7556). The controlled ultralow frequency oscillator is composed of the first time-base integrated circuit ICa, resistance R4 and capacitances C1, C2. The self-excited oscillator is composed of a second time-base integrated circuit ICb within a double time-base integrated circuit IC, resistances R5, R6 and capacitance C3.

The controlled ultralow frequency oscillator and the self-excited oscillator both are nonoscillatory and further the buzzer HA is silent, when the buzzer slice BC does not detect the motion of the charging terminal, at this moment, the alarm is on alert. When the buzzer slice BC detects an abnormal motion of the charging terminal due to action of theft, a trigger voltage will be generated at both ends of resistance R3, activating the controlled ultralow frequency oscillator and the self-excited oscillator oscillate. Wherein, a 5Hz ultralow frequency oscillation signal generated by the controlled ultralow frequency oscillator will modulate a self-oscillation signal of the self-excited oscillator, to actuate the buzzer HA to sound an alarm. When the abnormal motion disappears, the controlled ultralow frequency oscillator and the self-excited oscillator will go on oscillating for about one minute and then stop. The buzzer HA stops sounding at the moment, and the alarm is on alert again. Wherein, resistances R1-R6 are 1/8W metal film resistor or carbon-film resistor, capacitance C1 is an aluminum electrolytic capacitor with a withstand voltage value 16, capacitances C2, C3 are monolithic capacitor, the buzzer slice BC is a piezoelectric ceramics buzzer slice with a 27mm diameter, and buzzer HA is a piezoelectric or electrical magnetic buzzer having an auxiliary acoustic chamber.

In some embodiments, the charging terminal further may comprise an smart temperature control unit 7 electrically connected to the AC-DC conversion unit 13 and the lithium battery module 4 respectively, for detecting and controlling an internal temperature of the charging terminal. As shown in Fig. 6, for instance, when the internal temperature is greater than 45°C, a resistance value of negative temperature thermal-sensitive device TH will reduce to a threshold voltage and a working state amplifier U4A will output one high level, switching on a MOS switch tube Q1. Under this situation, a fan motor with 5V DC power starts up, the fan rotates at a high speed and quickly convects the air thereby reducing the internal temperature and ensuring proper working of the charging terminal.

Specially, the charging terminal further may comprise a sterilization unit 8 comprising an AC-DC power circuit, an ultraviolet sterilization lamp sleeve and an ultraviolet sterilization lamp. The sterilization unit 8 is electrically connected to the AC-DC conversion unit 13 and the lithium battery module4 respectively. The ultraviolet sterilization lamp is a low-pressure mercury lamp which may be intensified by a lower mercury vapour pressure (<10-2Pa) to emit ultraviolet light (its spectral lines mainly comprise one line with a wavelength of 253.7nm and another line with a wavelength of 185nm), which causes chemical changes of nucleic acid, protoplasmic protein and enzyme and even death thereof.

## Claims

1. A charging terminal, comprising
a power module (1) connected with a power supply and configured to input, process and output electrical energy from the power supply;
an output module (2) comprising a plurality of output units in parallel connection, said plurality of output units electrically connected to a plurality of output ends of the power module (1) respectively so as to provide a plurality of power supply ports simultaneously; and
an identification and data distribution module (3) having a data input end and comprising a plurality of data channels respectively connected to the plurality of output units, said identification and data distribution module (3) being configured to identify type of external devices respectively connected to said plurality of power supply ports and provides corresponding charging current and/or distributes data to identified external devices through the plurality of output units.

2. The charging terminal of claim 1, wherein said power module (1) comprises an earth leakage protection unit (11), an energy metering unit (12) and an AC-DC conversion unit (13), a current from the power supply flowing through the earth leakage protection unit (11), the energy metering unit (12) and the AC-DC conversion unit (13) in sequence and then to the output module (2).

3. The charging terminal of claim 1, wherein said output unit comprises a short out and overcurrent protection switch (Q1) having a MOS switch tube with an internal resistance being 30-40 milliohm.

4. The charging terminal of claim 1 or 3, wherein said output unit comprises:
an output end connected to an external device,
a switch member (Q1) and a current detecting resistance (R4), connected in series between a feedback end of said output end and a ground end, and
a protection processor (U1B) for comparing a voltage signal from said switch member (Q1) and said current detecting resistance (R4) with a reference voltage from a reference voltage source (U2) and outputting a first signal for controlling said switch member (Q1) based on a result of the comparison, and/or a working state amplifier (U1C) which outputs a second signal for an indicator light (L1) based on said voltage signal from the switch member (Q1) and the current detecting resistance (R4).

5. The charging terminal of claim 1, wherein said identification and data distribution module (3) comprises a first stage hub connected to a data-source server and at least a set of hubs connected to an output end of the first stage hub, said at least a set of hubs comprising a plurality of cascaded hubs.

6. The charging terminal of claim 5, wherein said data input end of the identification and data distribution module (3) is connected with said data-source server through wired network, WIFI, or Bluetooth, said data-source server being installed with a data fixed-type time-divisional and distributing program.

7. The charging terminal of claim 2, further comprising a lithium battery module (4) which comprises a DC-DC synchronous rectification step-down unit electrically connected with said plurality of output units respectively, and a lithium battery connected with the AC-DC conversion unit (13) and the DC-DC synchronous rectification step-down unit.

8. The charging terminal of claim 7, wherein said DC-DC synchronous rectification step-down unit comprises an input LC filter circuit, a voltage feedback circuit electrically connected with said input LC filter circuit, a pair of switch tubes connected with said voltage feedback circuit, and an energy storage inductance coupled with said pair of switch tubes.

9. The charging terminal of claim 8, wherein said pair of switch tubes are MOS switch tube (Q1, Q2) with an internal resistance of 30-40 milliohm.

10. The charging terminal of any of claims 1-9, further comprising a Bluetooth-lock unit (5) electrically connected to the AC-DC conversion unit (13) and the lithium battery module (4) respectively, to lock and unlock the charging terminal.

11. The charging terminal of claim 10, further comprising a motion detection unit (6) electrically connected to the AC-DC conversion unit (13) and the lithium battery module (4), said motion detection unit (6) comprising an alarm and a buzzer (HA) interconnected with each other for monitoring motion status of the charging terminal and starting said alarm when monitoring abnormal motion status of the charging terminal.

12. The charging terminal of claim 11, wherein said alarm comprises
a controlled ultralow frequency oscillator having a first time-base integrated circuit (ICa),
a self-excited oscillator having a second time-base integrated circuit (ICb) electrically connected to said first time-base integrated circuit (ICa) and said buzzer (HA) respectively, and
an anti-theft detection circuit electrically connected to the first time-base integrated circuit (ICa).

13. The charging terminal of claim 12, further comprising an smart temperature control unit (7) electrically connected to the AC-DC conversion unit (13) and the lithium battery module (4) respectively, for detecting and controlling an internal temperature of the charging terminal.

14. The charging terminal of claim 13, further comprising a sterilization unit (8) comprising an AC-DC power circuit, an ultraviolet sterilization lamp sleeve and an ultraviolet sterilization lamp, said sterilization unit (8) being electrically connected to the AC-DC conversion unit (13) and the lithium battery module (4) respectively.
